# EUROPÄISCHE PATENTSCHRIFT

(11) **EP 1 388 652 B1**
(45) Veröffentlichungstag und Bekanntmachung des Hinweises auf die Patenterteilung: **13.10.2010**
(21) Anmeldenummer: 03016461.0
(22) Anmeldetag: 22.07.2003
(51) Int. Cl.: F02B 27/02, F02D 9/16

(54) **Ansaugkanalsystem**
Intake duct system
Système de conduit d'admission

(30) Priorität: 08.08.2002 DE 10236393
(43) Veröffentlichungstag der Anmeldung: 11.02.2004
(73) Patentinhaber: Pierburg GmbH, 41460 Neuss (DE)
(72) Erfinder: Brunetti, Costantino, 57730 Froedenberg (DE); Huesges, Hans-Juergen, 47877 Willich (DE)
(74) Vertreter: Patentanwälte ter Smitten

(56) Entgegenhaltungen:
- EP-A- 1 081 357
- EP-A- 1 083 310
- EP-A- 1 138 895
- WO-A-99/20879
- DE-A1- 19 954 455

## Beschreibung

Die Erfindung betrifft ein Ansaugkanalsystem für Kraftfahrzeug-Brennkraftmaschinen. Insbesondere ist das Ansaugkanalsystem für V-Motoren geeignet.

Es ist bekannt, in Luftansaugkanälen von Brennkraftmaschinen zur Beeinflussung des Strömungsverhaltens der angesaugten Luft Drossel-, Drallund/oder Tumbelklappen vorzusehen. Durch derartige Klappen kann die Luftmenge sowie die Verwirbelung der Luftströmung gesteuert werden. Insbesondere bei V-Motoren ist der vorhandene Bauraum in dem Bereich des Luftansaugkanalsystems, in dem derartige Klappen angeordnet werden, sehr gering. Auf Grund des geringen vorhandenen Platzes werden die Klappen beispielsweise an einer Seitenwand des Kanals einseitig gelagert. Die einseitige Lagerung derartiger Klappen ist äußerst aufwändig. Ferner ist eine exakte Steuerung auf Grund der auftretenden Strömungskräfte im Kanal schwierig. Dem gegenüber sind mittig in dem Ansaugkanal gelagerte Drosselklappen vorteilhaft, da hierdurch eine im Wesentlichen symmetrische Strömung erzeugt werden kann. Die mittige Lagerung der Drosselklappen ist jedoch häufig aus Platzgründen nicht möglich. Ferner weisen mittig in dem Ansaugkanal gelagerte Klappen den Nachteil auf, dass auch vollständig geöffnete Klappen innerhalb des Kanals angeordnet bleiben und somit einen Strömungswiderstand darstellen, der ggf. zu nachteiligen Verwirbelungen der Luft bzw. des strömenden Mediums führen kann.

Ferner ist das Vorsehen von Schaltklappen in Luftansaugkanalsystemen bekannt. Schaltklappen dienen zur Variation der Länge von Ansaugkanälen. Ein aus DE 196 14 474 bekanntes Luftansaugkanalsystem weist für jeden Zylinder einen spiralförmig verlaufenden Luftansaugkanal auf. Hierbei erfolgt das Ansaugen der Luft über einen zentralen, innerhalb der spiralförmigen Ansaugkanäle angeordneten Sammel-Einlasskanal. Durch den für sämtliche Luftansaugkanäle gemeinsam vorgesehenen Sammel-Einlasskanal wird Luft angesaugt und über die einzelnen Luftansaugkanäle zur Brennkraftmaschine geleitet. Zum Verändern der Länge des Luftansaugkanals ist ein Kurzschlusskanal vorgesehen. Dieser mit einer Schaltklappe öffen- und verschließbare Kurzschlusskanal ist mit dem Sammel-Einlasskanal und jeweils einem Luftansaugkanal verbunden. Mehrere Schaltklappen sind ggf. über eine gemeinsame Welle miteinander verbunden. Die Lagerung der Welle erfolgt in einem Kanalelement, wie einem Gehäuseteil des Luftansaugkanalsystems. Hierzu weist das Luftansaugkanalsystem z.B. zwei Gehäusehälften auf, wobei die Schaltwelle zwischen die Gehäusehälften eingelegt wird. Die Anordnung der Schaltklappen weist den selben Nachteil wie mittig in einem Ansaugkanal gelagerte Drosselklappen auf. Insbesondere führt die Schaltklappe auch bei völlig geöffnetem Zustand zu nachteiligen Verwirbelungen der Luft, da auch die vollständig geöffnete Schaltklappe innerhalb des Ansaugkanals angeordnet ist und einen Strömungswiderstand bildet.

DE 199 54 455 beschreibt eine Stelleinrichtung für Luftansaugrohre einer Brennkraftmaschine mit zwei Luftansaugrohren und zwei Stellgliedern, die unabhängig voneinander bewegt werden können. Durch die Bewegung der beiden Stellglieder kann der Querschnitt der Luftansaugrohre verändert werden. Weiterhin ist es möglich, zwei Gaseinlasskanäle unabhängig voneinander zu steuern. Die Zuordnung der Saugrohre zu den Einlasskanälen ist ebenfalls einstellbar.

Aufgabe der Erfindung ist es, ein Ansaugkanalsystem für Kraftfahrzeug-Brennkraftmaschinen zu schaffen, bei welchem das Strömungsverhalten verbessert ist.

Die Lösung der Aufgabe erfolgt erfindungsgemäß durch die Merkmale des Anspruchs 1.

Das erfindungsgemäße Ansaugkanalsystem weist ein Kanalelement auf, das zumindest einen Teil mindestens eines Ansaugkanals ausbildet. Bei dem Kanalelement kann es sich auch um ein Gehäuseteil oder eine Gehäusehälfte handeln, durch die ggf. mehrere spiralförmig verlaufende Ansaugkanäle ausgebildet sind. Innerhalb des Ansaugkanals ist eine schwenkbare Klappe angeordnet. Bei der Klappe kann es sich um eine Drossel-, Drall- und/ oder Tumbleklappe sowie eine Schaltklappe zur Variation der Länge von Ansaugkanälen handeln. Zum Schwenken der Klappe ist diese mit einer Schwenkwelle verbunden, wobei ggf. mehrere Klappen eine gemeinsame Schwenkwelle aufweisen. Die Schwenkwelle ist von Lagerelementen getragen, die in dem Kanalelement angeordnet sind. Hierbei sind an jeder Lagerstelle vorzugsweise zwei Lagerelemente, d.h. Lagerhälften, vorgesehen, um die Montage zu vereinfachen.

Zur Verbesserung des Strömungsverhaltens ist an einer Innenseite des Kanalelements eine Tasche vorgesehen, in die die Klappe schwenkbar ist. Bei vollständig geöffnetem Strömungskanal ist die Klappe somit aus dem Strömungskanal herausgeschwenkt und in der Tasche angeordnet, so dass das Strömungsverhalten durch die Klappe nicht mehr beeinträchtigt wird.

Die Klappe und/ oder die Tasche ist derart ausgebildet, dass in eingeklapptem Zustand, d.h. wenn sich die Klappe in der Tasche befindet, eine Klappeninnenseite mit der Kanalinnenseite eine im Wesentlichen glatte Fläche ausbildet. Hierdurch sind Verwirbelungen und dgl. vermieden. Dadurch, dass eine Kante des Verbindungselementes als Anschlagelement vorgesehen ist, ist ein definiertes Einschwenken möglich.

Bei einer weiteren Ausführungsform ist ein Verbindungselement vorgesehen, durch das zwei Lagerelemente einander gegenüberliegender Lagerstellen verbunden wird. Das Verbindungselement ist erfindungsgemäß kanalbildend, so dass ein Teil der Innenseite des Kanals durch das Verbindungselement ausgebildet ist. Dies hat den Vorteil, dass die Montage einer Klappe auf einfache Weise zusammen mit den Lagerelementen erfolgen kann und somit erheblich vereinfacht ist. Das Vorsehen eines Verbindungselements zwischen zwei Lagerelementen ist insbesondere vorteilhaft, wenn mehrere Klappen, insbesondere Schaltklappen, über eine gemeinsame Welle miteinander verbunden und über die gemeinsame Welle gemeinsam verschwenkbar sind. Vorteilhaft ist es hierbei ferner, das Verbindungselement zusammen mit den zwei Lagerelementen einteilig auszubilden.

Durch das Vorsehen eines kanalbildenden Verbindungselements in Verbindung mit einer an der Innenseite des Kanalelements vorgesehenen Tasche ist es möglich, das Kanalelement auf einfache Weise im Druckgussverfahren oder ähnlichen Verfahren herzustellen. Bei der Herstellung des Kanalelements wird hierbei eine Ausnehmung vorgesehen bzw. nach dem Gießen hergestellt. Die Ausnehmung kann nicht nur in Richtung des Ansaugkanals geöffnet sein, um die Tasche auszubilden, sondern auch in Richtung einer Außenseite des Kanalelements. Bei der Außenseite handelt es sich beispielsweise um eine Verbindungsebene, an der zwei als Gehäusehälften ausgebildete Kanalelemente miteinander verbunden werden oder über die das Kanalelement mit dem Zylinderkopf verbunden ist. Diese Ausnehmung weist keine Hinterschneidungen auf, so dass deren Herstellung äußerst einfach ist. Ferner ist es bei einer derartigen erfindungsgemäßen Ausgestaltung der Ausnehmung möglich, die Klappe zusammen mit den Lagerelementen und dem zwei Lagerelemente verbindenden Verbindungselement in die Ausnehmung einzulegen. Die Montage ist somit äußerst einfach. Die Tasche wird in montiertem Zustand vorzugsweise durch das Kanalelement zusammen mit dem Verbindungselement gebildet.

Nachfolgend wird die Erfindung anhand einer bevorzugten Ausführungsform unter Bezugnahme auf die anliegenden Zeichnungen näher erläutert.

Es zeigen:
- Fig. 1: eine schematische, teilweise geschnittene Seitenansicht eines Ansaugkanalsystems,
- Fig. 2: eine schematische, perspektivische Draufsicht einer geöffneten Klappe in eingebautem Zustand,
- Fig. 3: eine schematische, perspektivische Draufsicht einer geöffneten Klappe in nicht eingebautem Zustand,
- Fig. 4: eine schematische, perspektivische Draufsicht einer teilweise geschlossenen Klappe in eingebautem Zustand,
- Fig. 5: eine schematische, perspektivische Draufsicht einer teilweise geschlossenen Klappe in nicht eingebautem Zustand und
- Fig. 6: eine Vergrößerung des in Fig. 1 geschnitten dargestellten Bereichs des Ansaugkanalsystems.

Ein Luftansaugkanalsystem weist im dargestellten Ausführungsbeispiel als Kanalelemente eine untere Gehäusehälfte 10 sowie eine obere Gehäusehälfte 12 auf. Über einen zentralen Lufteinsaugkanal 14 wird Luft in das Luftansaugkanalsystem eingesaugt und über einzelne im Wesentlichen spiralförmige Luftansaugkanäle 16, 18 den einzelnen Zylindern der Brennkraftmaschine zugeführt. Das dargestellte Luftansaugkanalsystem ist für einen V-Motor geeignet, wobei die bei einem 6-Zylinder V-Motor drei hintereinander angeordneten Luftansaugkanäle 16 mit der einen Zylinderreihe des V-Motors und die drei gegenüberliegenden Luftansaugkanäle 18 mit der anderen Zylinderreihe des V-Motors verbunden sind.

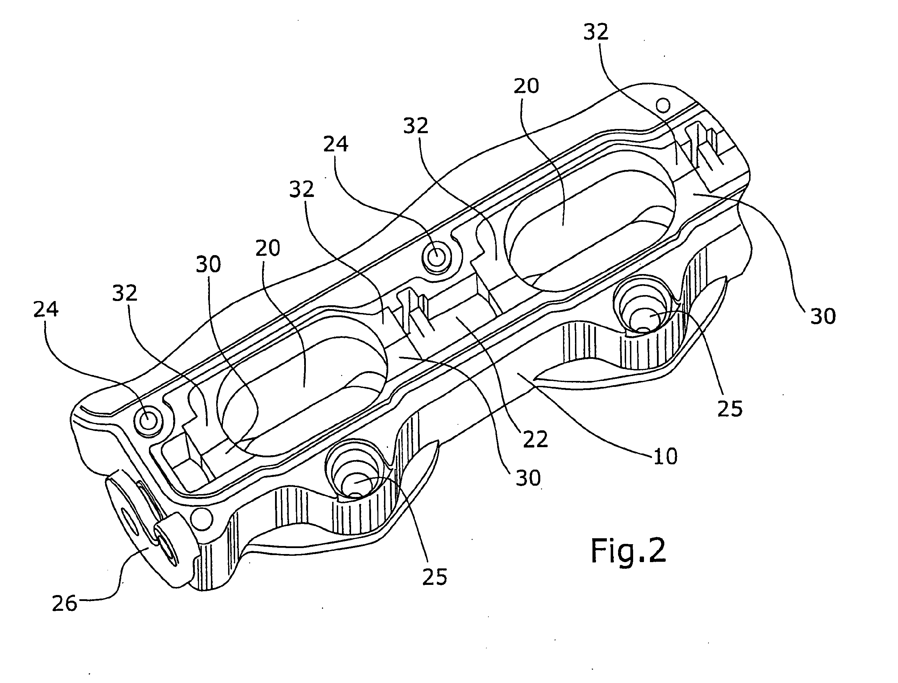

Die untere Gehäusehälfte 10 dient zur Aufnahme von Tumbelklappen 20 (Fign. 2 - 6). Hierbei ist je Luftansaugkanal des Luftansaugkanalsystems, d.h. bezüglich der drei Luftansaugkanäle 16 bzw. der drei Luftansaugkanäle 18 jeweils eine gemeinsame Schwenkwelle 22 vorgesehen, die mit den im dargestellten Ausführungsbeispiel drei Tumbleklappen 20 verbunden ist.

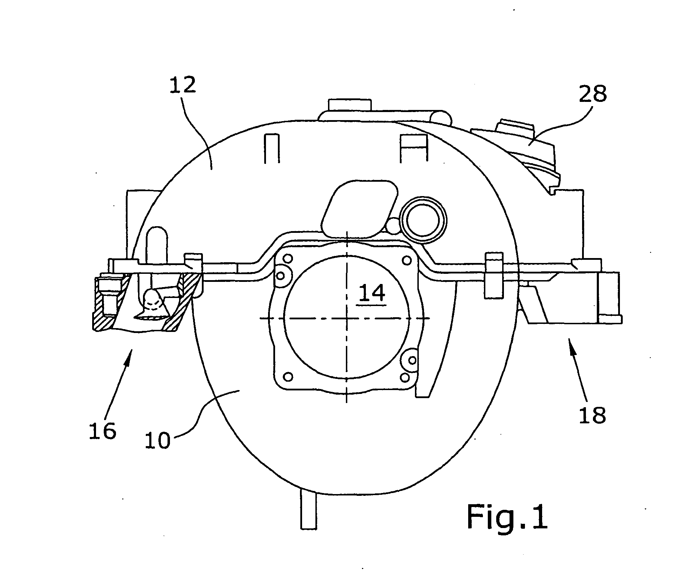

Ferner weist die untere Gehäusehälfte Befestigungsbohrungen 24 auf, die zum Verbinden der beiden Gehäusehälften 10,12 dienen. Ferner weist die Gehäusehälfte Einspritzventilsitze 25 auf. Mit der Welle 22 ist ein Betätigungshebel 26 verbunden. Der Betätigungshebel dienst zum Betätigen der Tumbelklappe 20 und ist hierzu mit einem Betätigungsorgan 28 (Fig. 1) verbunden.

Zur Lagerung der mit den Tumbleklappen 20 verbundenen Schwenkwelle 22 sind jeweils vier Lagerelemente 30,32 vorgesehen. Die beiden Lagerelemente 32 sind über das kanalbildende Verbindungselement 34 miteinander verbunden, wobei die Lagerelemente 32 und das Verbindungselement 34 einstückig ausgebildet sind. Die Lagerelemente 30,32 und das Verbindungselement 34 sind vorzugsweise aus Kunststoff hergestellt. Ebenso ist die Tumbleklappe 20, die zusammen mit der Welle 22 einstückig ausgebildet ist, vorzugsweise aus Kunststoff hergestellt.

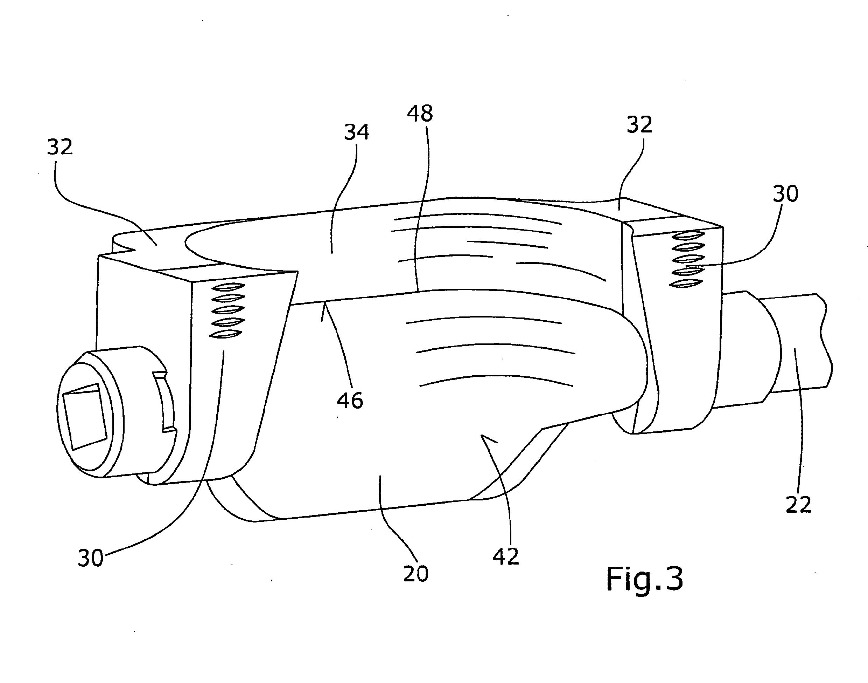

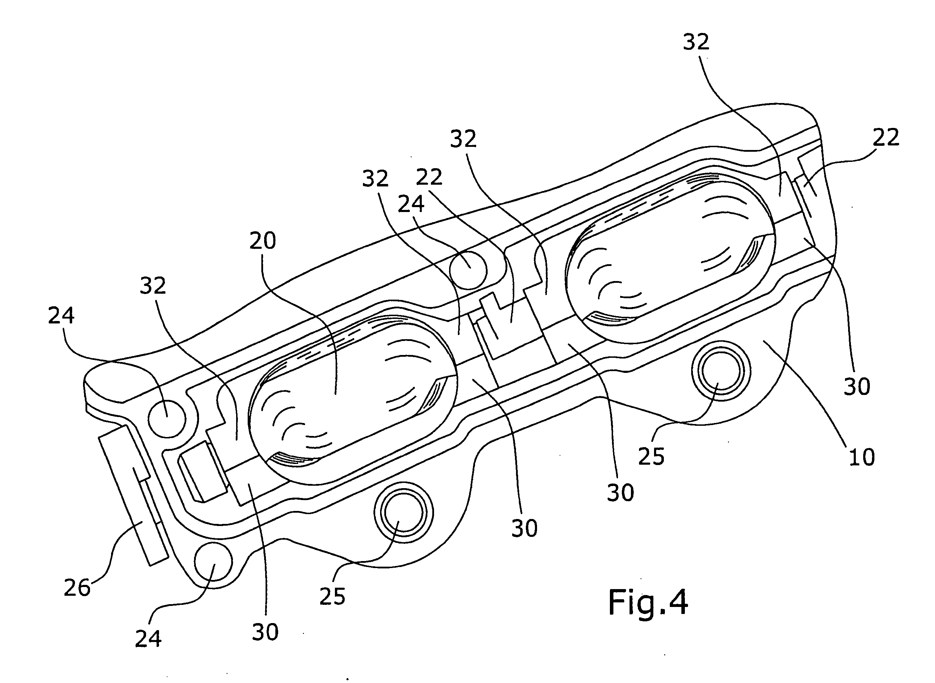

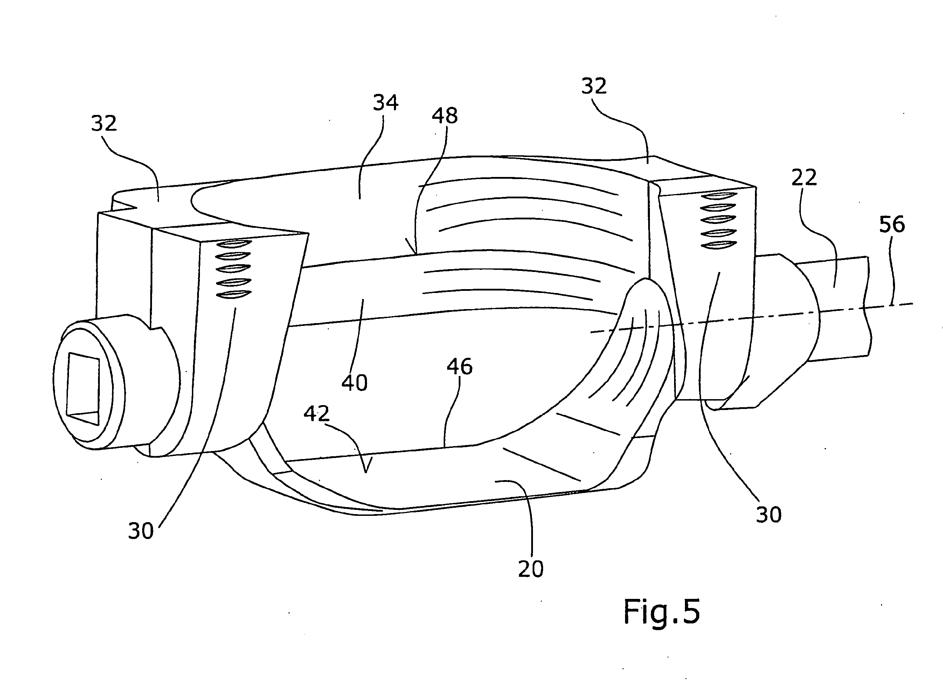

Die in Fign. 3 und 5 dargestellte Einheit wird vormontiert und in Fig. 2 bzw. 4 von oben in das Kanalelement bzw. die Gehäusehälfte 10 eingelegt.

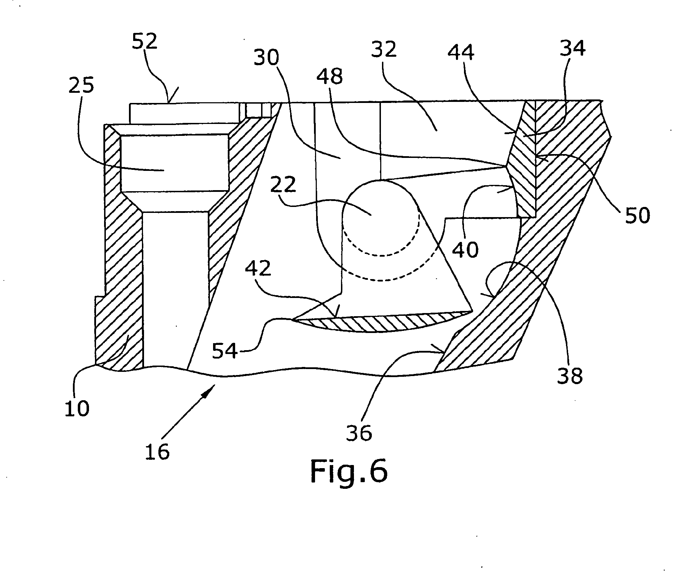

An einer Innenseite 36 (Fig. 6) des den Ansaugkanal 16 bildenden Kanalelements 10 ist eine Tasche 38 ausgebildet. Im dargestellten Ausführungsbeispiel ist ein Teil der Tasche 38 durch die Ausnehmung 40 (Fig. 5), die in dem Verbindungselement 34 angeordnet ist, gebildet. In vollständig geöffnetem Zustand (Fig. 2 und 3) der Klappe 20 ist diese innerhalb der Tasche 38 angeordnet. Hierbei bildet eine Klappeninnenseite 42 zusammen mit der Innenseite 36 des Kanals 16 und einer Innenseite 44 des Verbindungselements 34 eine glatte Fläche, die vorzugsweise stufenlos ist, so dass das Auftreten von Verwirbelungen in dem Kanal 16 vermieden ist.

Hierzu liegt eine Außenkante 46 der Tumbleklappe 20 bei vollständig geöffneter, d.h. in die Tasche 38 eingeschwenkter Klappe 20 an einer Kante 48 des Verbindungselements 34 an. Die Kante 48 dient hierbei ferner als Anschlagelement bzw. Anschlagkante , durch die das vollständige Öffnen des Kanals 16 bzw. das vollständige Einschwenken der Klappe 20 in die Tasche 38 definiert ist.

Zur Montage der in den Fign. 3 und 5 dargestellten Einheit weist das Kanalelement bzw. die Gehäusehälfte 10 eine Ausnehmung 50 (Fig. 6) auf. Die Ausnehmung 50 ist in Richtung einer Verbindungsebene 52 bzw. einer Außenseite 52 des Kanalelements 10 offen, so dass die in den Fign. 3 und 5 dargestellte Einheit, insbesondere das Verbindungselement 34, in Fig. 6 von oben in die Ausnehmung eingelegt werden kann. Das bevorzugte Vorsehen und die erfindungsgemäße Anordnung der Ausnehmung 50 weist den Vorteil auf, dass sie keine Hinterschneidungen aufweist und somit auf einfache Weise im Druckgussverfahren oder in anderen Gussverfahren hergestellt werden kann. Da hierbei keine Hinterschneidungen auftreten, ist das Vorsehen eines Kerns nicht erforderlich, wodurch die Herstellungskosten erheblich reduziert werden können.

Die Klappe 20 ist in Richtung der Außenkante 46 sowie vorzugsweise auch in Richtung der gegenüberliegenden Kante 54 verjüngend ausgebildet. Insbesondere ist die Klappe 20 in den Außenbereichen, d.h. in Richtung der beiden Kanten 46, 54 konvex ausgebildet, wobei die Krümmung im Wesentlichen derjenigen der konkav ausgebildeten Tasche 38 bzw. der zur Tasche gehörenden Ausnehmung 40 entspricht.

Die Klappe 20 ist im Querschnitt im Wesentlichen U-förmig ausgebildet (Fig. 5). Es ist hierdurch möglich, die Schwenkwelle 22 im Wesentlichen mittig bezogen auf den Kanal 16 anzuordnen, da beim Schwenken der Klappe 20 diese auf Grund ihrer U-förmigen Ausgestaltung aus dem Kanal 16 in die Tasche 38 herausgeschwenkt wird. Eine Schwenkachse 56 ist hierbei zur Klappe 20 bzw. zu einer Klappeninnenseite 42 versetzt angeordnet.

## Patentansprüche

1. Ansaugkanalsystem für Kraftfahrzeug-Brennkraftmaschinen, mit einem zumindest einen Teil mindestens eines Ansaugkanals (16,18) ausbildenden Kanalelements (10), einer innerhalb des Ansaugkanals (16,18) angeordneten schwenkbaren Klappe (20), einer mit der Klappe (20) verbundenen Schwenkwelle (22) und von dem Kanalelement (10) getragenen Lagerelementen zur Aufnahme der Schwenkwelle (22), wobei das Kanalelement (10) an einer Kanalinnenseite (36) eine Tasche (38) aufweist, in die die Klappe (20) schwenkbar ist, wobei die Klappe (20) und/oder die Tasche (38) derart ausgebildet ist, dass sie mit einer Klappeninnenseite (42) in eingeschwenktem Zustand eine im Wesentlichen glatte Kanalinnenwand (36) bildet wobei ein zwischen zwei Lagerelementen (30,32) angeordnetes kanalbildendes Verbindungselement (34) zur Verbindung der zwei Lagerelemente (30,32) vorgesehen ist, wobei die Klappe (20) im Querschnitt im Wesentlichen u-förmig ist, **dadurch gekennzeichnet, dass** eine Außenkante (46) der Klappe (20) in eingeschwenktem Zustand an einer Kante (48) des Verbindungselementes (34) derart anliegt, dass eine im Wesentlichen stufenlose Fläche ausgebildet ist, wobei die Kante (48) als Anschlagkante dient, durch die das vollständige Einschwenken der Klappe in die Tasche definiert ist.

2. Ansaugkanalsystem nach Anspruch 1, **dadurch gekennzeichnet, dass** die Schwenkwelle (22) zur Klappe (20) versetzt angeordnet ist.

3. Ansaugkanalsystem nach einem der vorhergehenden Ansprüche, **dadurch gekennzeichnet, dass** an jeder Lagerstelle zwei Lagerelemente (30,32) vorgesehen sind.

4. Ansaugkanalsystem nach einem der vorhergehenden Ansprüche, **dadurch gekennzeichnet, dass** das Kanalelement (10) eine Ausnehmung (50) aufweist, in die das Verbindungselement (34) einlegbar ist.

5. Ansaugkanalsystem nach einem der vorhergehenden Ansprüche, **dadurch gekennzeichnet, dass** das Kanalelement (10) mit einem zweiten Kanalelement (12) zur Ausbildung des Ansaugkanals (16,18) verbindbar ist und die Ausnehmung (50) in Richtung einer Verbindungsebene (52) offen ist.

6. Ansaugkanalsystem nach einem der vorhergehenden Ansprüche, **dadurch gekennzeichnet, dass** die Klappe (20) in Richtung der Außenkante (46), die in Richtung des Verbindungselements (34) weist, sich verjüngend ausgebildet ist.

## Claims

1. Intake duct system for internal combustion engines of motor vehicles, comprising a duct element (10) forming at least a part of at least one intake duct (16, 18), a pivotable flap (20) arranged in said intake duct (16, 18) a pivot shaft (22) connected to said flap (20), and bearing elements supported by said duct element (10) for receiving said pivot shaft (22), said duct element (10) having a pocket (38) on a duct inner side (36), into which the flap (20) can be pivoted, said flap (20) and/or said pocket (38) being formed such that, when in a state pivoted into said pocket, a flap inner side (42) forms a substantially smooth duct inner wall (36), a connection element (34), which forms a duct and is arranged between two bearing elements (30, 32), being provided to connect said two bearing elements (30, 32), said flap (20) having a substantially U-shaped cross section, **characterized in that** an outer edge (46) of the flap (20), when in said state pivoted into said pocket, abuts on an edge (48) of said connection element (34) such that a substantially smooth surface is formed, said edge (48) serving as a stop edge defining the state in which the flap is fully pivoted into the pocket.

2. Intake duct system of claim 1, **characterized in that** the pivot shaft (22) is offset with respect to the flap (20).

3. Intake duct system of one of the preceding claims, **characterized in that** two bearing elements (30, 32) are provided at each bearing position.

4. Intake duct system of one of the preceding claims, **characterized in that** said duct element (10) has a recess (50) into which said connection element (34) can be placed.

5. Intake duct system of one of the preceding claims, **characterized in that** said duct element (10) is adapted to be connected to a second duct element (12) to form said intake duct (16, 18), and the recess (50) is open toward a connection plane (52).

6. Intake duct system of one of the preceding claims, **characterized in that** said flap (20) is formed tapering towards the outer edge (46) that is directed towards the connection element (34).

## Revendications

1. Système de conduit d'admission pour moteurs à combustion interne de véhicules automobiles, comprenant un élément de conduit (10) formant au moins une partie d'au moins un conduit d'admission (16, 18), un clapet (20) pivotable disposé dans ledit conduit d'admission (16, 18), un arbre de pivotement (22) couplé audit clapet (20), et des éléments palier supportés par ledit élément de conduit (10) pour recevoir ledit arbre de pivotement (22), ledit élément de conduit (10) comprenant une poche (38) dans un côté interne (36) du conduit dans laquelle ledit clapet (20) peut être pivoté, ledit clapet (20) et/ou ladite poche (38) étant réalisé de manière que, en état pivoté dans la poche, une face interne (42) du clapet forme une paroi interne (36) du conduit sensiblement lisse, un élément connecteur (34), qui forme un conduit et est disposé entre deux éléments paliers (30, 32), étant prévu pour connecter les deux éléments paliers (30, 32), ledit clapet (20) présentant une section sensiblement en forme de U, **caractérisé en ce qu'**un bord externe (46) dudit clapet (20), en état pivoté dans ladite poche, reste contre un bord (48) dudit élément connecteur (34) de manière qu'une surface sensiblement continue, ledit bord (48) faisant office de bord de butée définissant le pivotement complet du clapet dans ladite poche.

2. Système de conduit d'admission selon la revendication 1, **caractérisé en ce que** l'arbre de pivotement (22) est disposé de manière décalée par rapport au clapet (20).

3. Système de conduit d'admission selon l'une quelconque des revendications précédentes, **caractérisé en ce que** deux éléments paliers (30, 32) sont prévus à chaque position de support.

4. Système de conduit d'admission selon l'une quelconque des revendications précédentes, **caractérisé en ce que** ledit élément de conduit (10) comprend un creux (50) dans lequel on peut placer ledit élément connecteur (34).

5. Système de conduit d'admission selon l'une quelconque des revendications précédentes, **caractérisé en ce que** ledit élément de conduit (10) est propre à être joint à un deuxième élément de conduit (12) pour former ledit conduit d'admission (16, 18), et que le creux (50) est ouvert vers un plan de joint (52).

6. Système de conduit d'admission selon l'une quelconque des revendications précédentes, **caractérisé en ce que** ledit clapet (20) est diminué vers le bord externe (48) qui est orienté dans la direction dudit élément connecteur (34).
